# EUROPEAN PATENT APPLICATION

(11) **EP 2 620 481 A1**
(43) Date of publication of application: **31.07.2013**
(21) Application number: 11826923.2
(22) Date of filing: 22.09.2011
(51) Int. Cl.: C09D 127/12, C09D 5/02, C09D 129/00, C09D 129/10, C09D 175/04

(54) **COMPOSITION FOR AQUEOUS COATING MATERIAL AND TWO PACK CURABLE AQUEOUS COATING MATERIAL KIT**

(30) Priority: 24.09.2010 JP 2010213907
(71) Applicant: Asahi Glass Company, Limited, Tokyo 100-8405 (JP)
(72) Inventor: SUMI, Naoko, Tokyo 100-8405 (JP); MASUDA, Shou, Tokyo 100-8405 (JP)
(74) Representative: Müller-Boré & Partner Patentanwälte
(86) International application number: PCT/JP2011/071712
(87) International publication number: WO 2012/039478

(57) **Abstract**

To provide an aqueous coating composition which contains a fluorinated copolymer and has excellent long-term storage stability and also excellent storage stability in cases where various components to be blended with a coating material are blended therewith; and a two-pack type curable aqueous coating material kit having excellent storage stability, in which the aqueous coating composition and a curing agent composition are used in combination.

An aqueous coating composition, which comprises water and particles that have an average particle size of from 50 to 100 nm and are made of a fluorinated copolymer (A) having from 40 to 60 mol% of fluoroolefin polymerized units (a1), from 1 to 5 mol% of polymerized units (a2) having carboxy groups in which from 95 to 100 mol% of the carboxy groups are changed into carboxylate groups , from 4 to 30 mol% of polymerized units (a3) having crosslinking groups other than carboxy groups, and from 3 to 50 mol% of polymerized units (a4) having a group containing an ether bond or ester bond in its side chain, based on the total amount of polymerized units contained in the copolymer, and which is characterized by having a pH of from 7.0 to 9.5.

## Description

### TECHNICAL FIELD

The present inven.tion relates to an aqueous coating composition containing a fluorinated copolymer, and a two-pack type curable aqueous coating kit.

### BACKGROUND ART

In recent years, for protection of natural environment, environmental pollution such as photochemical smog or global warming due to discharge of organic solvents, has been taken up as a problem, and discharge regulation or emission control is being implemented. Particularly in Europe, such control is advanced, and also in Japan, air pollution control law was revised in 2006, and legal discharge regulations were implemented.

In order to meet such legal regulations, also in the field of coating materials, efforts have been made to develop a coating method to increase the coating efficiency to effectively utilize a coating material or to introduce a high solid type coating material by increasing the solid content in a coating material thereby to reduce a solvent to be discharged. However, with such a high solid type coating material, there is a limit in reduction of the solvent.

Heretofore, aqueous coating compositions in which various synthetic resins of e.g. alkyd type, acryl type, polyester type, polyvinyl acetate type or epoxy type, are dispersed or dissolved in water have been known. An aqueous coating composition employing a crosslinkable fluorinated copolymer having hydroxy groups, as such a synthetic resin or as a part of such a synthetic resin, is widely known, since it is excellent in weather resistance.

As a fluorinated copolymer to be used for an aqueous coating composition, one having carboxy groups introduced in an organic solvent, and further, having some or all of such carboxy groups neutralized by a basic compound, in order to increase the affinity to water, is known (Patent Documents 1 and 2). Further, a fluorinated copolymer obtained by emulsion polymerization is also known (Patent Document 3).

However, in the aqueous dispersion or aqueous solution of the fluorinated copolymer disclosed in Patent Document 1, the amount of carboxy groups to be introduced is large, whereby gelation or precipitation is likely to occur as time passes due to decrease in its storage stability. Patent Document 2 discloses an aqueous dispersion or aqueous solution of a fluorinated copolymer which is obtained by suppressing the content of carboxy groups to a low level and has excellent storage stability, and further, discloses that the stability of a coating material prepared by blending the aqueous dispersion or aqueous solution of the fluorinated copolymer as a main component with various components, is excellent. However, with respect to the storage stability for a longer period of time, precipitation of each component tends to occur.

On the other hand, in a case where a fluorinated copolymer obtained by emulsion polymerization is used as in Patent Document 3, the obtained emulsion coating material has had a problem such that the film-forming property is poor, or due to the remaining emulsifier, the water resistance or adhesion tends to be poor.

### PRIOR ART DOCUMENTS

### PATENT DOCUMENTS

Patent Document 1: WO2004/072197
Patent Document 2: WO2007/125970
Patent Document 3: Japanese Patent No. 3356803

### DISCLOSURE OF INVENTION

### TECHNICAL PROBLEM

The present invention has been made to solve the above-mentioned problems, and is to provide an aqueous coating composition which contains a fluorinated copolymer and has excellent long-term storage stability and also excellent storage stability in cases where various components to be blended with a coating material are blended therewith; and a two-pack type curable aqueous coating material kit having excellent storage stability, in which the aqueous coating composition and a curing agent composition are used in combination.

### SOLUTION TO PROBLEM

The present invention provides the following constructions.
[1] An aqueous coating composition, which comprises water and particles that have an average particle size of from 50 to 100 nm and are made of a fluorinated copolymer (A) having from 40 to 60 mol% of the following polymerized units (a1), from 1 to 5 mol% of the following polymerized units (a2), from 4 to 30 mol% of the following polymerized units (a3), and from 3 to 50 mol% of the following polymerized units (a4), based on the total amount of polymerized units contained in the copolymer, and which is characterized by having a pH of from 7.0 to 9.5:
   Polymerized units (a1): polymerized units derived from a fluoroolefin
   Polymerized units (a2): polymerized units having carboxy groups which are partially or totally neutralized and changed into carboxylate groups, wherein the proportion of the carboxylate groups in the total amount of the polymerized units (a2) is from 95 to 100 mol% (provided that at least either one of the carboxy groups and the carboxylate groups may be dissociated into cations and anions in the aqueous coating composition)
   Polymerized units (a3): polymerized units having crosslinking groups other than carboxy groups
   Polymerized units (a4): polymerized units represented by the following formula
      (1); 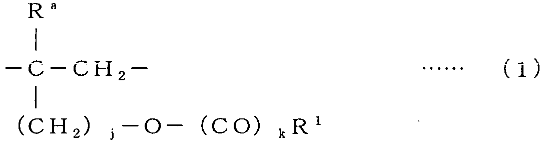 (provided that, in the formula (1), R^{a} is a hydrogen atom or a methyl group, R¹ is a C₁₋₁₂ alkyl group or a C₄₋₁₀ monovalent cycloalkyl group, j is an integer of from 0 to 8, and k is 0 or 1).
[2] The aqueous coating composition according to [1], wherein the fluoroolefin is at least one member selected from the group consisting of tetrafluoroethylene, hexafluoropropylene, chlorotrifluoroethylene and vinylidene fluoride.
[3] The aqueous coating composition according to [1] or [2], wherein the crosslinking groups contained in the polymerized units (a3) are at least one member selected from the group consisting of hydroxy groups, amino groups, and alkoxysilyl groups.
[4] The aqueous coating composition according to any one of [1] to [3], wherein the proportion of the particles made of the fluorinated copolymer (A) is from 10 to 50 mass% based on the total amount of the composition.
[5] The aqueous coating composition according to any one of [1] to [4], wherein a monomer to form the polymerized units (a4) is ethyl vinyl ether, n-butyl vinyl ether, cyclohexyl vinyl ether, vinyl acetate, vinyl valerate or vinyl pivalate.
[6] The aqueous coating composition according to any one of [1] to [5], which further contains a colorant.
[7] A two-pack type curable aqueous coating material kit comprising the aqueous coating composition as defined in any one of [1] to [6] as a main component, and a curable agent composition containing water-soluble or water-dispersible curing agent having functional groups which can react with the crosslinking groups contained in the fluorinated copolymer (A).
[8] The two-pack type curable aqueous coating material kit according to [7], wherein the curing agent is a polyisocyanate compound.
[9] The two-pack type curable aqueous coating material kit according to [8], wherein the polyisocyanate compound is a non-blocked polyisocyanate compound.
[10] The two-pack type curable aqueous coating material kit according to [8] or [9], wherein the polyisocyanate compound contains a polyoxyalkylene group having a hydroxy group or a C₁₋₅ alkoxy group at its terminals.

### ADVANTAGEOUS EFFECTS OF INVENTION

The aqueous coating composition of the present invention has excellent long-term storage stability and also excellent storage stability in cases where various components to be blended with a coating material are blended therewith. Further, according to the present invention, it is possible to provide a two-pack type curable aqueous coating material kit comprising the aqueous coating composition and a curing agent composition, and having excellent storage stability.

### DESCRIPTION OF EMBODIMENTS

In the present specification, unless otherwise specified, "%" means "mass%". "polymerized units" of a fluorinated copolymer may be referred to as "units", and "polymerized units formed by a monomer" may be referred to as "units of a monomer". The same may apply to monomers or olefins other than the above-described ones.

Now, embodiments of the present invention will be described, but it should be understood that the present invention is by no means restricted thereto.

### [Aqueous coating composition]

The aqueous coating composition of the present invention is an aqueous coating composition, which comprises water and particles that have an average particle size of from 50 to 100 nm and are made of a fluorinated copolymer (A) having from 40 to 60 mol% of the following polymerized units (a1), from 1 to 5 mol% of the following polymerized units (a2), from 4 to 30 mol% of the following polymerized units (a3), and from 3 to 50 mol% of the following polymerized units (a4), based on the total amount of polymerized units contained in the copolymer, and which is characterized by having a pH of from 7.0 to 9.5:
Polymerized units (a1): polymerized units derived from a fluoroolefin
Polymerized units (a2): polymerized units having carboxy groups which are partially or totally neutralized and changed into carboxylate groups, wherein the proportion of the carboxylate groups in the total amount of the polymerized units (a2) is from 95 to 100 mol% (provided that at least either one of the carboxy groups and the carboxylate groups may be dissociated into cations and anions in the aqueous coating composition)
Polymerized units (a3): polymerized units having crosslinking groups other than carboxy groups
Polymerized units (a4): polymerized units represented by the above formula (1)

Heretofore, for the aqueous coating composition prepared by using a fluorinated copolymer having crosslinking groups (crosslinking fluorinated copolymer), it has been tried to obtain the storage stability of the aqueous coating composition by reducing the amount of carboxy groups or carboxylate groups (hereinafter sometimes referred to as "carboxy groups, etc.") contained in the fluorinated copolymer, i.e. by suppressing its acid value to a low level. The present inventors have found a problem such that the average particle size of dispersed particles dispersed in water becomes large, although a certain level of storage stability can generally be obtained when the acid value of a crosslinking fluorinated copolymer becomes low, whereby precipitation is likely to occur depending upon conditions.

Until now, there has been no attempt to improve the storage stability of an aqueous coating composition comprising a crosslinking fluorinated copolymer by adjusting the acid value of the crosslinking fluorinated copolymer and the average particle size of dispersed particles dispersed in water. Further, preparation and use of a crosslinking fluorinated copolymer (A) having the acid value range of the present invention, i.e. the blending ratio of polymerized units (a2) having carboxy groups, etc., in which an average particle size at the time of dispersing to water is adjusted to a low level of from 50 to 100 nm, have not been carried out.

In the present invention, with regard to a fluorinated copolymer having crosslinking groups, the acid value, i.e. the blending ratio of polymerized units (a2) having carboxy groups, etc. is adjusted, the proportion of carboxylate groups in the polymerized units (a2) is adjusted to from 95 to 100 mol%, and the pH of a dispersion is adjusted, and then the average particle size of dispersed particles of the fluorinated copolymer when they are dispersed in water is adjusted to the above-described range. As a result, the long-term storage stability of the aqueous coating composition containing the crosslinking fluorinated copolymer improves, and further, the storage stability in cases where various components to be added into coating materials are added therein is ensured.

### <Fluorinated copolymer (A)>

The fluorinated copolymer (A) contained in the aqueous coating composition of the present invention is a fluorinated copolymer having, based on the total polymerized units contained in the copolymer, from 40 to 60 mol% of the polymerized units (a1) derived from a fluoroolefin, from 1 to 5 mol% of the polymerized units (a2) having carboxy groups which are partially or totally neutralized and changed into carboxylate groups, wherein the proportion of the carboxylate groups in the total amount of the polymerized units (a2) is from 95 to 100 mol%, from 4 to 30 mol% of the polymerized units (a3) having crosslinking groups other than carboxy groups, and from 3 to 50 mol% of the polymerized units (a4) represented by the above formula (1).

The polymerized units (a1) derived from a fluoroolefin may, for example, be polymerized units represented by the following formula (2).

-CX¹X²-CX³X⁴- (2)

(provided that, in the formula (2), each of X¹, X², X³ and X⁴ is independently a hydrogen atom, a chlorine atom, a fluorine atom or a C₁₋₃ alkyl group which may have a halogen atom, and at least one of X¹ to X⁴ is a fluorine atom or an alkyl group having a fluorine atom.)

The monomer to form the polymerized units represented by the above formula (2) may, for example, be a fluoroethylene such as CF₂=CF₂, CClF=CF₂, CHCl=CF₂, CCl₂=CF₂, CCIF=CCIF, CHF=CCl₂, CH₂=CClF or CCl₂=CClF; a fluoropropene such as CF₃CH=CF₂, CF₂ClCF=CF₂, CF₃CCl=CF₂, CF₃CF=CFCl, CF₂ClCCl=CF₂, CF₂ClCF=CFCl, CFCl₂CF=CF₂, CF₃CCl=CClF, CF₃CCl=CCl₂, CClF₂CF=CCl₂, CCl₃CF=CF₂, CF₂ClCCl=CCl₂, CFCl₂CCl=CCl₂, CF₃CF=CHCl, CClF₂CF=CHCl, CHF₂CCl=CCl₂, CF₂ClCH=CCl₂, CF₂ClCCl=CHCl, CCl₃CF=CHCl or CH₂BrCF=CCl₂; and a fluoroolefin type compound having a number of carbon atoms of at least 4 such as CF₃CCl=CFCF₃, CF₂=CFCF₂CClF₂ or CF₃CF₂CF=CCl₂.

Among such monomers, a fluoroethylene and a fluoropropylene are preferred. The fluoroethylene is preferably a tetrafluoroethylene, a chlorotrifluoroethylene or a vinylidene fluoride, and the fluoropropylene is preferably a hexafluoropropylene. When the fluorocopolymer (A) contains polymerized units derived from these monomers, excellent weather resistance of a coated film will be obtained.

The proportion of the polymerized units (a1) in the fluorocopolymer (A) of the present invention is from 40 to 60 mol% based on the total amount of polymerized units, but is more preferably from 45 to 55 mol%. When the proportion of the polymerized units (a1) in the fluorinated copolymer (A) is within the above range, sufficient weather resistance will be obtained, and the glass transition temperature of the fluorinated copolymer (A) will not be too high, whereby it is possible to obtain an amorphous good film. The polymerized units (a1) contained in the fluorinated copolymer (A) may be one type, or two or more types of the polymerized units (a1) may be contained in the fluorinated copolymer (A).

The above-mentioned polymerized units (a2), i.e. polymerized units having carboxy groups which are partially or totally neutralized and changed into carboxylate groups, wherein the proportion of the carboxylate groups in the total amount of the polymerized units (a2) contained in the copolymer is from 95 to 100 mol% (provided that at least either ones of the carboxy groups and the carboxylate groups may be dissociated into cations and anions in the aqueous coating composition) may, for example, be polymerized units represented by the following formula (3). 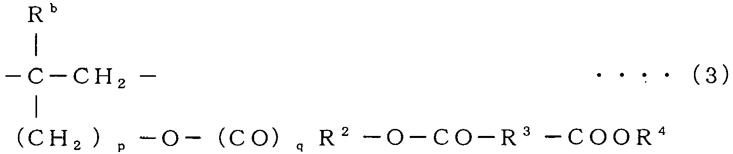 (provided that, in the formula (3), R^{b} is a hydrogen atom or a methyl group, R² is a C₁₋₁₀ alkylene or a C₄₋₁₀ divalent alicyclic group, R³ is a C₂₋₁₀ alkylene group which may have an ethylenic double bond or a C₄₋₁₀ divalent alicyclic or aromatic group, R⁴ is a hydrogen atom or -NHZ¹Z²Z³ (each of Z¹, Z² and Z³ is independently a hydrogen atom, a C₁₋₄ alkyl group or a C₁₋₆ hydroxyalkyl group). Further, from 95 to 100 mol% of R⁴ based on the total amount of polymerized units represented by the formula (3) contained in the fluorinated copolymer as the polymerized units (a2) is essentially -NHZ¹Z²Z³. p is an integer of from 0 to 8, and q is 0 or 1.)

The proportion of -NHZ¹Z²Z³ as R⁴ based on the total amount of polymerized units represented by the formula (3) contained in the fluorinated copolymer (A) as the polymerized units (a2) is, as described above, from 95 to 100 mol%, but such a proportion is preferably from 98 to 100 mol%, more preferably 100 mol%. In the formula (3), in a case where the proportion of -NHZ¹Z²Z³ as R⁴ is 100 mol%, the polymerized units (a2) become polymerized units composed only of carboxylate groups.

At least either ones of the carboxy groups and carboxylate groups of the polymerized units (a2) (-COOH and -COO-NHZ¹Z²Z³ in a case where R⁴ of the formula (3) is H and -NHZ¹Z²Z³, respectively) may be dissociated into cations and anions (H⁺ or NHZ¹Z²Z³⁺ and -COO⁻, for the polymerized units represented by the formula (3),).

The polymerized units represented by the formula (3) are preferably polymerized units in which p=0, q=0, R² is a C₂₋₈ alkylene group, R³ is a C₂₋₈ alkylene group, and R⁴ is a trialkylamino group, and among them, polymerized units in which p=0, q=0, R² is butylene group, R³ is ethylene group, and R⁴ is triethylamino group are more preferred from the viewpoint of polymerizability, crosslinking property, etc.

The polymerized units represented by the formula (3) can be introduced into the fluorinated copolymer (A) by e.g. method (i) wherein a carboxylic acid salt is copolymerized as a monomer, method (ii) wherein -COOR⁴ of the formula (3) is copolymerized in the form of -COOH, and then the carboxy group is neutralized by a basic compound such as an amine, and method (iii) wherein hydroxy group-containing polymerized units represented by the below-mentioned formula (5) in which a hydrogen atom is bonded instead of a group represented by -CO-R³-COOR⁴ in the formula (3) are introduced into the fluorinated copolymer, and then subjected to esterification by a dicarboxylic acid represented by HOOC-R³-COOH or its anhydride, followed by neutralizing the carboxy groups by a basic compound such as an amine finally.

In the case of introducing polymerized units represented by the formula (3) by the method (iii), as preferred hydroxy group containing polymerized units, polymerized units disclosed as preferred examples of the below-mentioned hydroxy group containing polymerized units may be mentioned. Further, the above-mentioned dicarboxylic acid or its anhydride may, for example, be succinic acid, succinic anhydride, glutaric acid, glutaric anhydride, itaconic acid, itaconic anhydride, adipic acid, adipic anhydride, 1,2-cyclohexane dicarboxylic acid, 1,2-cyclohexane dicarboxylic anhydride, cis-4-cyclohexene-1,2-dicarboxylic acid, cis-4-cyclohexene-1,2-dicarboxylic anhydride, phthalic acid, phthalic anhydride, 1,8-naphthalic acid, 1,8-naphthalic anhydride, maleic acid and maleic anhydride. Among them, an acid anhydride is preferred, and succinic anhydride and cis-4-cyclohexene-1,2-dicarboxylic acid are more preferred.

The proportion of the polymerized units (a2) in the fluorinated copolymer (A) of the present invention is from 1 to 5 mol% based on the total polymerized units, but the lower limit of the proportion of the polymerized units (a2) is preferably 1.4 mol%, more preferably 1.6 mol%. Further, the upper limit of the proportion of the polymerized units (a2) is preferably 3.6 mol%. The polymerized units (a2) contained in the fluorinated copolymer (A) may be one type, and two or more types of the polymerized units (a2) may be contained in the fluorinated copolymer (A).

Here, the proportion of the polymerized units (a2) in the fluorinated copolymer (A) of the present invention can be ascertained by an acid value. When the proportion of the polymerized units (a2) in the fluorinated copolymer (A) is within the above range, from 1 to 5 mol%, the acid value would be within a range of about from 5 to 25 mgKOH/g, when the proportion is within the preferred range of from 1.4 to 5 mol%, the acid value would be within a range of about from 7 to 25 mgKOH/g, and when the proportion is within the more preferred range of from 1.6 to 3.6 mol%, the acid value would be within a range of about from 8 to 18 mgKOH/g.

Further, the acid value is calculated based on the total amount of carboxy groups and carboxylate groups contained in the polymerized units (a2).

When the proportion of the polymerized units (a2) in the fluorinated copolymer (A) is within the above range, the fluorinated copolymer (A) shows excellent dispersibility to water, and excellent stability in water. Therefore, the aqueous coating composition containing such a fluorinated copolymer have sufficient storage stability, whereby the water resistance of a coated film obtained therefrom can be ensured.

Further, by neutralizing from 95 to 100 mol% of the carboxy groups contained in the fluorinated copolymer (A) to form carboxylate groups, it becomes possible to adjust the size of particles dispersed in water to within an average particle size range of from 50 to 100 nm even in a case where the above acid value is within a small range, and as a result, the storage stability of the aqueous coating composition, particularly the storage stability when various dispersion/dissolution components are blended will become excellent.

Further, the average particle size of the fluorinated copolymer (A) dispersed in water is from 50 to 100 nm from the viewpoint of obtaining sufficient storage stability of the aqueous coating composition containing such a copolymer, but is preferably from 60 to 95 nm, more preferably from 65 to 90 nm.

In this specification, the average particle size of particles dispersed in water is an average particle size measured by a dynamic light scattering method.

The polymerized units (a3) contained in the fluorinated copolymer (A) is polymerized units having crosslinking groups other than carboxy groups. The crosslinking groups are not particularly limited so long as they are crosslinking groups other than carboxy groups, but are preferably crosslinking groups selected from hydroxy groups, amino groups and alkoxysilyl groups, particularly preferably hydroxy groups.

The polymerized units (a3) having alkoxysilyl groups as the crosslinking groups may, for example, be polymerized units represented by the following formula (4). 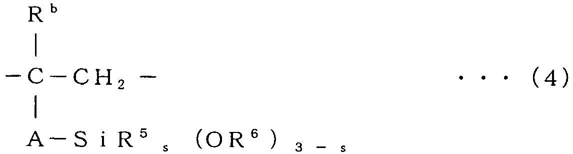 (provided that, in the formula (4), R^{b} has the same meaning as R^{b} in the above formula (3), and A is a single bond or a C₁₋₃ linear alkylene group which may have an etheric oxygen atom, a carbonyl group, a carbonyloxy group or an iminocarbonyloxy group. Each of R⁵ and R⁶ is independently a C₁₋₅ alkyl group. s is an integer of from 0 to 2.)

In the polymerized units represented by the formula (4), each of R⁵ and R⁶ is preferably independently a methyl group, an ethyl group or a propyl group. Further, s is preferably 0 or 1, and is more preferably 0.

The monomer to form the polymerized units represented by the formula (4) is preferably an acrylic acid ester or methacrylic acid ester such as CH₂=CHCO₂(CH₂)₃Si(OCH₃)₃, CH₂=CHCO₂(CH₂)₃Si(OC₂H₅)₃, CH₂=C(CH₃)CO₂(CH₂)₃Si(OCH₃)₃, CH₂=C(CH₃)CO₂(CH₂)₃Si(OC₂H₅)₃, CH₂=CHCO₂(CH₂)₃SiCH₃(OC₂H₅)₂, CH₂=C(CH₃)CO₂(CH₂)₃SiC₂H₅(OCH₃)₂ or CH₂=C(CH₃)CO₂(CH₂)₃Si(CH₃)₂(OC₂H₅); a vinylsilane such as CH₂=CHSi(OCH₃)₃, CH₂=CHSi(OC₂H₅)₃, CH₂=CHSiCH₃(OCH₃)₂, CH₂=CHSi(CH₃)₂(OC₂H₅) or CH₂=CHSi(CH₃)₂SiCH₃(OCH₃)₂; a silylalkyl vinyl ether such as trimethoxysilylethyl vinyl ether, triethoxysilylethyl vinyl ether, trimethoxysilylbutyl vinyl ether, methyldimethoxysilylethyl vinyl ether, trimethoxysilylpropyl vinyl ether, triethoxysilylpropyl vinyl ether, CH₂=CHO(CH₂)₄OCONH(CH₂)₃Si(OCH₃)₃, CH₂=CHO(CH₂)₄OCONH(CH₂)₃Si(OC₂H₅)₃ or a partial hydrolysate thereof.

Among them, as the monomer to form the polymerized units represented by the formula (4), CH₂=CHCO₂(CH₂)₃Si(OCH₃)₃, CH₂=CHCO₂(CH₂)₃Si(OC₂H₅)₃, CH₂=CHSi(OCH₃)₃, CH₂=CHSi(OC₂H₅)₃, CH₂=CHO(CH₂)₄OCONH(CH₂)₃Si(OCH₃)₃, CH₂=CHO(CH₂)₄OCONH(CH₂)₃Si(OC₂H₅)₃, etc. are preferred since they are readily available.

The monomer to form the polymerized units (a3) having amino groups as the crosslinking groups is, e.g., preferably an amino vinyl ether represented by CH₂=CHO-(CH₂)ₜ-NH₂ (t=0 to 10); an allylamine represented by CH₂=CH-O-CO(CH₂)ₜ-NH₂ (t=1 to 10); an aminomethylstyrene, a vinylamine, an acrylamide, a vinylacetamide, a vinylformamide or the like.

The polymerized units (a3) having hydroxy groups as the crosslinking groups may, for example, be the polymerized units represented by the following formula (5). 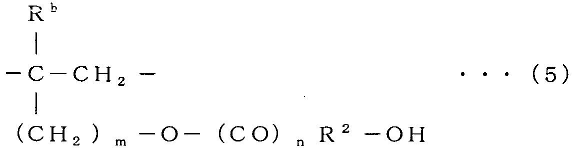 (provided that R^{b} and R² in the formula (5) have the same meanings as R^{b} and R² in the formula (3), m is an integer of from 0 to 8, and n is 0 or 1.)

The polymerized units represented by the formula (5) are preferably polymerized units derived from, e.g., hydroxy group-containing vinyl ethers, hydroxy group-containing vinyl esters, hydroxy group-containing allylethers, or hydroxy group-containing allylesters, and more specifically, polymerized units derived from hydroxyalkyl vinyl ether, hydroxyalkyl vinyl ester, hydroxyalkyl allyl ether, hydroxyalkyl allyl ether or hydroxyalkyl allyl ester are preferred. Among them, polymerized units derived from hydroxyalkyl vinyl ether are more preferred from the viewpoint of polymerizability, crosslinking property, etc. Further, the monomer to form the polymerized units represented by the formula (5) may, for example, be 2-hydoxyethyl vinyl ether, 4-hydroxybutyl vinyl ether, 1-hydroxymethyl-4-vinyloxymethyl cyclohexane and 4-hydroxybutyl vinyl ester. Particularly, hydroxy group-containing vinyl ethers are preferred, and 2-hydroxyethyl vinyl ether and 4-hydroxybutyl vinyl ether are more preferred.

The proportion of the polymerized units (a3) having crosslinking groups other than carboxy groups in the fluorinated copolymer (A) is preferably from 4 to 30 mol%, more preferably from 8 to 25 mol%, based on the total polymerized units.

When the proportion of the polymerized units (a3) is within the above range, at the time of crosslinking, the crosslinking density will be within an appropriate range, and the water resistance of a coated film containing the fluorinated copolymer (A) will be improved. One type of the polymerized units (a3) may be contained in the fluorinated copolymer (A), and two or more types of the polymerized units (a3) may be contained in the fluorinated copolymer (A).

The fluorinated copolymer (A) of the present invention contains, in addition to the above-described polymerized units (a1) to polymerized units (a3), polymerized units (a4) represented by the following formula (1). 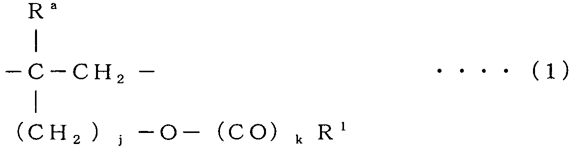 (provided that, in the formula (1), R^{a} is a hydrogen atom or a methyl group, R¹ is a C₁₋₁₂ alkyl group or a C₄₋₁₀ monovalent cycloalkyl group, j is an integer of from 0 to 8, and k is 0 or 1.)

The polymerized units (a4) represented by the above formula (1) are preferably polymerized units derived from an alkylvinyl ether (j=0, k=0), an alkylvinyl ester (j=0, k=1), an alkylallyl ether (j=1, k=0) or an alkylallyl ester (j=1, k=1). Further, R^{a} is preferably a hydrogen atom.

Further, the monomer to form the polymerized units (a4) represented by the formula (1) is preferably ethyl vinyl ether, n-butyl vinyl ether, cyclohexyl vinyl ether, vinyl acetate, vinyl valerate or vinyl pivalate, and an appropriated one is selected among them depending on the desired physical properties of a coated film (such as hardness, gloss and pigment dispersibility). Among them, an alkyl vinyl ether is preferred in view of its excellent reactivity with (a1).

Among them, ethyl vinyl ether, cyclohexyl vinyl ether, etc. are preferred since the mutual copolymerizability with a fluoroolefin is excellent. Further, when the fluorinated copolymer (A) contains polymerized units derived from such monomers, it becomes easier to adjust the glass transition temperature of the fluorinated copolymer (A), thereby to improve the characteristic properties of a coated film such as hardness, bendability resistance, etc.

The proportion of the polymerized units (a4) in the fluorinated copolymer (A) is from 3 to 50 mol% based on the total polymerized units in the copolymer, but is preferably from 20 to 45 mol%. One type of the polymerized units (a4) may be contained in the fluorinated copolymer (A), and two or more types of the polymerized units (a4) may be contained in the fluorinated copolymer (A).

The total mol% of the proportion of the polymerized units (a1), polymerized units (a2), polymerized units (a3) and polymerized units (a4) in the fluorinated copolymer (A) of the present invention is preferably from 80 to 100 mol%, more preferably from 95 to 100 mol%, further preferably 100 mol%.

That is, the fluorinated copolymer (A) of the present invention may contain polymerized units other than the polymerized units (a1) to polymerized units (a4) (hereinafter referred to as other polymerized units), and the proportion of such other polymerized units in the fluorinated copolymer (A) is preferably less than 20 mol%, more preferably less than 5 mol%.

Such other polymerized units may be polymerized units derived from a non-fluorinated ethylenic monomer having no crosslinking functional group, and may, for example, be a non-fluorinated olefin including ethylene, propylene, n-butene and isobutene.

Further, particularly preferred constitution of the fluorinated copolymer (A) of the present invention is a constitution wherein from 45 to 55 mol% of the polymerized units (a1), from 1.4 to 5 mol% of the polymerized units (a2), from 8 to 25 mol% of the polymerized units (a3) and from 20 to 45 mol% of the polymerized units (a4) are contained therein, and having no such other polymerized units.

Further, the weight average molecular weight of the fluorinated copolymer (A) is preferably within a range of from 3,000 to 200,000. When the weight average molecular weight is within such a range, the coating property, the weather resistance of a coated film, and the outer appearance of a coated film will be improved. Further, in the present specification, the weight average molecular weight and the number average molecular weight are measured by gel permeation chromatography using polystyrene as the standard.

### <Production of fluorinated copolymer (A)>

Each of the polymerized units contained in the fluorinated copolymer (A) of the present invention are produced as described above, but the fluorinated copolymer (A) may, for example, be produced by copolymerizing monomers to form each of the polymerized units in accordance with a conventional method in the presence or absence of a polymerization catalyst, by applying a polymerization initiating source such as a polymerization initiator or an ionizing radiation. In order to maintain the copolymerization reaction system in an alkaline side during polymerization, the copolymerization reaction is preferably carried out in the presence of a basic compound.

As the polymerization initiator, a peroxy ester type peroxide such as t-butylperoxy acetate, a dialkylperoxy dicarbonate such as diisopropylperoxy dicarbonate may be used. Further, benzoyl peroxide or azobisisobutyronitrile may, for example, be used as the polymerization initiator.

The basic compound can be selected among various organic basic compounds and inorganic basic compounds. The organic basic compound is preferably an alkylamine such as triethylamine or an alkylphosphine such as triethylphosphine. The inorganic basic compound is preferably a carbonate, hydroxide or oxide of an alkali metal or an alkaline earth metal such as potassium carbonate, potassium hydroxide, sodium hydroxide or magnesium hydroxide.

The amount of the polymerization initiator to be used may suitably be changed depending on its type or copolymerization reaction conditions. However, usually, it is used in an amount of from about 0.05 to 0.5 parts by mass based on the total amount of monomers to be copolymerized. The amount of the basic compound to be used is from about 0.01 to 20 parts by mass, preferably from about 0.1 to 10 parts by mass, based on the total amount of monomers needed to be copolymerized.

For the above copolymerization reaction, solution polymerization, emulsion polymerization, and suspension polymerization, etc. are used, but particularly preferably solution polymerization is employed. The solvent is preferably an alcohol, an ester, a ketone, a saturated halogenated hydrocarbon containing at least one fluorine atom or aromatic hydrocarbon such as xylene.

The reaction temperature for the copolymerization reaction is preferably from 10 to 90°C. Further, the reaction pressure is preferably from 0 to100 kg/cm²·G, more preferably from 1 to 50 kg/cm²·G.

Here, with regard to the above-described polymerized units (a1), polymerized units (a3) and polymerized units (a4), a method of introducing monomers to form each of the polymerized units into the fluorinated copolymer (A) by copolymerization is usually employed. The polymerized units (a2) can be introduced into the fluorinated copolymer (A) by the above-described methods (i) to (iii) described as the methods for introducing polymerized units represented by the formula (3). The method (i) wherein various monomers to form each of the polymerized units (a1), polymerized units (a3) and polymerized units (a4) are copolymerized along with monomers to form the polymerized units (a2) is already described above.

Further, in a case where the fluorinated copolymer (A) contains other polymerized units, monomers to form such other polymerized units can be introduced into the fluorinated copolymer (A) by copolymerizing them along with the above-described various monomers in the same manner as for the polymerized units (a1), polymerized units (a3) and polymerized units (a4). The case where other polymerized units are contained will not be described, but the case where such other polymerized units are contained will be treated in the same manner as for the polymerized units (a1) and polymerized units (a4).

Further, among the above-described (i) to (iii), as a preferred method, the method (iii) wherein hydroxy group-containing polymerized units to form the polymerized units (a2) are introduced by copolymerization along with the polymerized units (a1), polymerized units (a3) and polymerized units (a4), and then subjected to esterification and neutralization treatment to introduce the polymerized units (a2) is employed.

Further, in the method (iiii), in a case where hydroxy group-containing polymerized units (a3) are used as the polymerized units (a3), even if the hydroxy group-containing polymerized units to form the polymerized units (a2) and hydroxy group-containing polymerized units (a3) are formed from different types of monomers, it is difficult to selectively esterify only the hydroxy group-containing polymerized units to form the polymerized units (a2). Therefore, usually, the hydroxy group-containing polymerized units to form the polymerized units (a2) and the hydroxy group-containing polymerized units (a3) are formed by using the same monomers. That is, it is preferred to produce fluorinated copolymer (A) having polymerized units (a3) and no polymerized units (a2), and then transform some of the polymerized units (a3) into polymerized units (a2) by esterification.

Now, the production process of the fluorinated copolymer (A) to be used in the present invention will be described by exemplifying a case where the above method (iii), i.e. hydroxy group-containing polymerized units (a3) are used as the polymerized units (a3) having crosslinking groups other than carboxy groups and some or all of the polymerized units (a3) are transformed into the polymerized units (a2) is employed.

Firstly, various monomers to form each of the polymerized units (a1), polymerized units (a3) and polymerized units (a4) are copolymerized to obtain fluorinated copolymer, (X) as a precursor of the fluorinated copolymer (A) used in the present invention (hereinafter sometimes referred to as "precursor copolymerization step"). The blend amount of each of the monomers is the same as the mol% for each of the polymerized units in the fluorinated copolymer (A) with regard to the polymerized units (a1) and the polymerized units (a4), and is, with regard to the polymerized units (a3), adjusted so that it becomes the same as the total mol% of the polymerized units (a3) and the polymerized units (a2) in the fluorinated copolymer (A). The types and amounts of various components such as polymerization initiators to be used for copolymerization, basic compounds, solvents, and other various conditions for copolymerization may be the same as ones described above.

Further, the fluorinated copolymer (X) as a precursor of the above-described fluorinated copolymer (A) may be produced, as described above, by copolymerizing various monomers as the starting material components. However, commercially available products may be used as the fluorinated copolymer (X). As such commercially available products, e.g., LUMIFLON (product name: manufactured by Asahi Glass Company, Limited), ZEFFLE (product name, manufactured by Daikin Industries, Ltd.), etc. may be mentioned.

After the precursor copolymerizing step, some of the hydroxy group-containing polymerized units introduced into the fluorinated copolymer (X) as the polymerized units (a3) are esterified to an extent corresponding to the mol% of the polymerized units which will finally become the polymerized units (a2) (hereinafter sometimes referred to as "esterification step").

Esterification is, for example, carried out by reacting fluorinated copolymer (X) containing the polymerized units (a1), polymerized units (a3) and polymerized units (a4) obtained by solution polymerization with an appropriate amount of an dicarboxylic acid anhydride in an organic solvent. As a result of the esterification, some of the polymerized units (a3), specifically an amount corresponds to the mol% of the polymerized units (a3) which will finally become the polymerized units (a2), e.g., hydroxy group-containing polymerized units represented by the formula (5), are transformed into polymerized units represented by the formula (3) in which R⁴ is a hydrogen atom.

The dicarboxylic acid anhydride to be used for the esterification may, for example, be preferably succinic anhydride, glutaric anhydride, itaconic anhydride, adipic anhydride, 1,2-cyclohexane dicarboxylic acid anhydride, cis-4-cyclohexene-1,2-dicarboxylic acid anhydride, phthalic anhydride, 1,8-naphthalic anhydride or maleic anhydride.

Further, the above-mentioned dicarboxylic acid may be used for the esterification.

The organic solvent may, for example, be an alcohol such as methanol, ethanol, n-propanol, isopropanol, n-butanol, isobutanol, secondary butanol, tertiary butanol or pentanol; a cellosolve such as methylcellosolve, ethylcellosolve, isopropylcellosolve, butylcellosolve or secondary butylcellosolve; a propylene glycol derivative such as propylene glycol methyl ether, dipropylene glycol ethyl ether, propylene glycol methyl ether acetate or ethylene glycol ethyl ether acetate; a ketone such as acetone, methyl ethyl ketone or methyl isobutyl ketone; or an aromatic compound such as toluene or xylene. The organic solvent is appropriately selected by considering solubility of a fluorinated copolymer to be esterified and a dicarboxylic acid anhydride, easiness in removing the solvent, etc.

Further, in a case where the organic solvent used in the copolymerization process of the precursor copolymerization step remains sufficiently, there is no need to add an organic solvent additionally in the esterification step.

Further, in the esterification step, a catalyst may be used in combination. The catalyst is a metal salt of a carboxylic acid, an alkali hydroxide, an alkali metal carbonate, a quaternary ammonium salt or a tertiary amine, and is preferably a tertiary amine such as triethylamine.

The reaction temperature for the esterification step is preferably from room temperature to 150°C, more preferably from 50 to 100°C. The reaction time is at a level of from a few tens minutes to a few hours.

The amount of the dicarboxylic acid anhydride to be used for the esterification reaction is preferably determined to such an amount that the proportion of the polymerized units (a2) would be from 1 to 5 mol% based on the total polymerized units and the proportion of the polymerized units (a3) would be from 4 to 30 mol% based on the total polymerized units, in the fluorinated copolymer (A) which will be obtained finally.

Further, by measuring the acid value after the esterification reaction, although the polymerized units (a2) having from 95 to 100 mol% of carboxylate groups formed by neutralization to form a salt and from 0 to 5 mol% of carboxy groups are obtained finally, the proportion of polymerized units containing carboxy groups which are not neutralized at this stage in the fluorinated copolymer can be ascertained. For example, in a case where the acid value after the esterification is from 5 to 25 mgKOH/g, polymerized units containing carboxy groups which are not neutralized, i.e. polymerized units which will become the polymerized units (a2) by the following neutralization treatment, can be ascertained to be about from 1 to 5 mol%.

After the precursor copolymerization step, the amount of the polymerized units (a3) in the precursor fluorinated copolymer (X) before the esterification step can be ascertained by measuring the hydroxy value of the fluorinated copolymer (X) before the esterification step. To achieve from 4 to 30 mol% of the proportion of the polymerized units (a3) in the fluorinated copolymer (A) of the present invention which will be obtained finally, it is preferred that the hydroxy value of the precursor fluorinated copolymer (X) before the esterification is from 20 to 150 mgKOH/g and the acid value after the esterification is within the above range.

After the esterification step, a basic compound is added to the esterified fluorinated copolymer (X), thereby to neutralize from 95 to 100 mol% of carboxy groups introduced during the esterification step (hereinafter sometimes referred to as "neutralization step"). The fluorinated copolymer (A) obtained by the neutralization step which contains each of the polymerized units (a1) to (a4) in an amount of the above-described ranges of their blend amounts is one example of the embodiment used in the present invention.

In the fluorinated copolymer (A) used in the present invention, the proportion of carboxy groups which are neutralized by a basic compound is from 95 to100 mol% in the polymerized units (a2), but this proportion is preferably from 98 to 100 mol%, more preferably 100 mol%.

In the neutralization step, for example, by introducing a basic compound or an aqueous solution of a basic compound to an organic solvent in which the esterified fluorinated copolymer (X) is dissolved while stirring for a few tens minutes to room temperature, neutralization reaction proceeds sufficiently, and then from 95 to 100 mol% of carboxy groups contained in the esterified fluorinated copolymer (X) are neutralized to form a salt and become the polymerized units (a2), whereby the fluorinated copolymer (A) used in the present invention is produced.

In the neutralization step, to the organic solvent in which the esterified fluorinated copolymer (X) obtained in the esterification step is dissolved, a basic compound is added along with water. Water may be added with a basic compound simultaneously or separately, or may be added in a manner wherein some water is added simultaneously and the remaining water is added separately. When adding simultaneously, an aqueous solution of a basic compound is preferably used. When adding separately, water may be added before or after the addition of a basic compound.

Among them, a method of adding water after addition of a basic compound, and a method of adding an aqueous solution of a basic compound are preferred.

The amount of water to be added in the neutralization step is preferably adjusted to such an amount that the solid content of the esterified fluorinated copolymer (X) based on the total amount of the reaction mixture after addition of water becomes from 3 to 50 mass%, particularly from 15 to 40 mass%.

The basic compound used in the neutralization step is preferably a basic compound having a boiling point of at most 200°C, which tends to hardly remain in a coated film.

The basic compound may, for example, be a primary, secondary or tertiary alkylamine such as ammonia, monomethylamine, dimethylamine, trimethylamine, monoethylamine, diethylamine, triethylamine, monoisopropylamine, diisopropylamine, triisopropylamine, monobutylamine or dibutylamine; an alkanolamine such as monoethanolamine, monoisopropanolamine, dimethylaminoethanol or diethylaminoethanol; a diamine such as ethylenediamine, propylenediamine, tetramethylenediamine or hexamethylenediamine; an alkyleneimine such as ethyleneimine or propyleneimine; or piperazine, morpholine, pyrazine or pyridine.

The amount of the basic compound used in the neutralization step is preferably such an amount that from 95 to 100 mol% of carboxy groups contained in the esterified fluorinated copolymer (X) are neutralized, specifically, such an amount that the basic compound is from 1.0 to 1.2 mole based on 1 mole of the carboxy groups. Further, as described below, usually, the aqueous dispersion of the fluorinated copolymer (A) obtained in the neutralization step is used as the aqueous coating composition of the present invention as it is, and in such a case, an unreacted basic compound which did not contribute to the neutralization step may be contained as a residual so long as its residual amount is at most 1 mass% based on the total amount of the composition. The amount of the basic compound to be added in the neutralization step is preferably such an amount that the amount of an unreacted basic compound after reaction in an aqueous coating composition will be within the above content.

As described above, as one embodiment of the fluorinated copolymer (A) used in the present invention, a fluorinated copolymer having each of the polymerized units (a1), polymerized units (a2), polymerized units (a3) and polymerized units (a4) in the above-described content (mol%) ranges is obtained in a reaction mixture. In the present invention, after completion of the neutralization step, it is preferred to remove a residual organic solvent from the reaction mixture containing the fluorinated copolymer (A). The solvent to be removed may be a residual organic solvent used in the copolymerization step or esterification step for producing the precursor fluorinated copolymer (X). Removal of the solvent may, for example, be carried out by distillation under reduced pressure.

### <Aqueous coating composition and its preparation>

The aqueous coating composition of the present invention is one which contains water and the above-described fluorinated copolymer (A), and is characterized in that the fluorinated copolymer (A) is dispersed in water as particles having an average particle size of from 50 to 100 nm and having a pH of from 7.0 to 9.5.

The content of the fluorinated copolymer (A) in the aqueous coating composition of the present invention is preferably from 3 to 60 mass%, more preferably from 30 to 50 mass%, based on the total amount of the composition, from the viewpoint of the coating property such as the pigment dispersibility, coatability or water resistance.

Further, the content of water in the aqueous coating composition of the present invention is preferably from 20 to 70 mass%, more preferably from 20 to 50 mass%, based on the total amount of the composition, from the viewpoint of the coatability and storage stability.

The pH range of the aqueous coating composition of the present invention is from 7.0 to 9.5, preferably from 7.5 to 9.0, more preferably from 7.5 to 8.5. By adjusting its pH to this range, it becomes possible to disperse, in the aqueous coating composition, the fluorinated copolymer to water stably for a long period of time as particles having an average particle size of from 50 to 100 nm. The pH of the aqueous coating composition of the present invention may be adjusted by a known method such as a method of using a pH-adjusting agent or the like.

The aqueous coating composition of the present invention can be prepared as a dispersion in which the fluorinated copolymer (A) particles having an average particle size of from 50 to 100 nm are dispersed in water by a usual method e.g. by blending the fluorinated copolymer (A) and water in the above-described blending ratio and then stirring and mixing them by means of a container equipped with a stirrer.

Specifically, in a case where the fluorinated copolymer (A) used in the present invention is obtained by a solution polymerization via the above method (i), the fluorinated copolymer (A) solution obtained by the solution polymerization and water are blended in such a ratio that the blend amount of the fluorinated copolymer (A) and water is within the above range, followed by stirring and mixing them by a usual method to disperse the fluorinated copolymer (A) to water, thereby to prepare an aqueous coating composition. Further, at that time, an organic solvent used in above solution polymerization is preferably removed at the time of before or after dispersing to water, or before and after dispersing to water. The organic solvent is preferably removed completely, but some cases, it may be remained in the aqueous coating composition within the below-mentioned content range.

The aqueous coating composition of the present invention may contain such an organic solvent within a range such that the effect of the present invention will not be impaired. The content of an organic solvent in the aqueous coating composition of the present invention is preferably at most 10 mass%, more preferably at most 3 mass%, based on the total amount of the aqueous coating composition.

Further, in a case where the fluorinated copolymer (A) used in the present invention is produced by the above method (iii), e.g. fluorinated copolymer (X) as a precursor is prepared by a solution polymerization and then it is subjected to the esterification step and neutralization step, an aqueous dispersion of the fluorinated copolymer (A) after the neutralization step may be used as the aqueous coating composition of the present invention as it is, by adjusting the blend amount of water, etc. as the case requires. Further, even in a case where the aqueous coating composition of the present invention is prepared in this way, the aqueous coating composition may contain an organic solvent within the above-described content range. The organic solvent which can be contained in the aqueous coating composition may, for example, be an organic solvent used in the esterification step, a residual organic solvent used in the copolymerization step of the precursor fluorinated copolymer (X), or the like.

The aqueous coating composition of the present invention contains water and the above-described fluorinated copolymer (A) as essential components, and may be blended with the below-described another component within a range not to impair the effects of the present invention as the case requires.

### <Another component>

In the aqueous coating composition of the present invention, another synthetic resin other than the fluorinated copolymer (A) may be dispersed or dissolved in water along with the fluorinated copolymer (A). Such another synthetic resin may be synthetic resin of a fluorine type, a phenol type, an alkyd type, a melamine type, a urea type, a vinyl type, an epoxy type, a polyester type, a polyurethane type, an acryl type or the like.

The fluorine type synthetic resin may be a fluorinated copolymer described in Japanese Patent No. 2,955,336 containing, as essential constituents, polymerized units derived from fluoroolefin and polymerized units derived from a macromonomer having a hydrophilic moiety. Here, the hydrophilic moiety is a moiety having a hydrophilic group, a moiety having a hydrophilic bond, or a moiety made of their combination. Further, the macromonomer is a low molecular weight polymer or oligomer having a radical-polymerizable unsaturated group at one terminal. When the fluorinated copolymer is contained, the mechanical stability and chemical stability of the aqueous coating composition are improved, such being preferred.

In the aqueous coating composition of the present invention, the content of such another synthetic resin other than the fluorinated copolymer (A) is preferably from 0 to 90 mass%, more preferably from 0 to 50 mass%, based on the total amount of the fluorinated copolymer (A) and such another synthetic resin.

In a case where a synthetic resin other than the fluorine type one is used as such another synthetic resin other than the fluorinated copolymer (A) of the present invention, it is preferred to adjust the blend amount of such another synthetic resin to be at most 50 mass% based on the total amount of the fluorinated copolymer (A) and such another synthetic resin, from a viewpoint such that excellent weather resistance will be imparted.

The aqueous coating composition of the present invention preferably optionally further contains an additive such as a coalescer, a leveling additive, a thickener, an ultraviolet absorber, a light stabilizer or an antifoaming agent. Further, a delustering agent or a colorant may be blended depending on application.

The coalescer may, for example, be diethylene glycol monoethyl ether acetate, 2,2,4-trimethyl-1,3-pentanediol mono(2-methylpropionate) or diethylene glycol diethyl ether.

Further, the coalescer is one type of the organic solvent may be contained in the aqueous coating composition of the present invention as the case requires. Therefore, when the coalescer is contained, the sum of the contents of the coalescer and other organic solvents is preferably adjusted to be at most 10 mass%, more preferably adjusted to be at most 3 mass%, based on the total amount of the aqueous coating composition.

In a case where the coalescer is contained, its content is preferably at most 3 parts by mass, particularly preferably at most 1 part by mass, per 100 parts by mass of the total amount of the fluorinated copolymer (A) and another synthetic resin (solid content of the polymer).

The leveling additive may, for example, be preferably a polyether-modified polydimethylsiloxane or a polyether-modified siloxane.

The thickener may, for example, be preferably a polyurethane type associative thickener.

As the ultraviolet absorber, it is possible to use various known ones. Particularly, the ultraviolet absorber suitable for use as a transparent coating material for top coating may, for example, be a salicylate such as methyl salicylate, phenyl salicylate, cresyl salicylate or benzyl salicylate; a benzophenone such as 2-hydroxybenzophenone, 2-hydroxy-4-benzyloxy benzophenone, 2-hydroxy-4-octoxy benzophenone, 2-hydroxy-5-chlorobenzophenone, 2-aminobenzophenone or a high molecular weight-modified product sold as T-57 (Product name) manufactured by Adeka corporation; a benzotriazole such as 2-(2'-hydroxy-5'-t-butylphenyl)benzotriazole, 2-(2'-hydroxy-5'-t-butylphenyl)-5-chlorobenzotriazole, 2-(2'-hydroxy-5'-methoxyphenyl)benzotriazole, 2-(2'-hydroxy-3',5'-di-neopentylphenyl)benzotriazole or a high molecular weight-modified product sold as TINUVIN 900 or 1130 (Product name) manufactured by Nihon Ciba-Geigy K.K.; a substituted acrylonitrile such as ethyl 2-cyano-3,3-diphenylacrylate, 2-ethylhexyl 2-cyano-3,3-diphenylacrylate or methyl α-cyano-β-methyl-4-methoxycinnamate; a nickel complex salt such as 2,2'-thiobis(4-octylphenolate) nickel complex salt or [2,2'-thiobis(4-t-octylphenolate)]-n-butylamine·nickel complex salt; an ultraviolet absorber such as dimethyl p-methoxybenzylidene malonate, resorcinol monobenzoic acid ester, hexamethylphosphoric triamide or 2,5-diphenyl-p-benzoquinone; bis(2,2,6,6-tetramethyl-4-piperidine)sebacate and dimethyl succinate/1-(2-hydroxyethyl)-4-hydroxy-2,2,6,6-tetramethylpiperidine polycondensate, or bis(1,2,2,6,6-pentamethyl-4-piperizyl) 2-(3,5-di-t-butyl-4-hydroxybenzyl)-2-n-butylmalonate. They may be used alone or in combination as mixture of two or more of them.

The ultraviolet absorber is preferably used within a range of from 0.1 to 15 parts by mass, particularly preferably within a range of from 0.1 to 5 parts by mass, per 100 parts by mass of the total amount of the fluorinated copolymer (A) and another synthetic resin (solid content of the polymer). If the amount of the ultraviolet absorber is too small, its effect of improving light resistance cannot be sufficiently obtained, and if it is too large, its effect is saturated, such being not proper.

The light stabilizer may, for example, be a hindered amine type light stabilizer such as MARK LA 57, 62, 63, 67 or 68 (product name), manufactured by ADEKA Corporation or TINUVIN 622LD (product name) manufactured by Ciba-Geigy. They may be used alone or as a mixture of two or more of them, or in combination with the ultraviolet absorber.

The antifoaming agent may, for example, be a fatty acid salt, a higher alcohol sulfate, a liquid fatty oil sulfuric acid ester, an aliphatic amine or aliphatic amide sulfate, an aliphatic alcohol phosphoric acid ester, a sulfonate of dibasic fatty acid ester, a fatty acid amide sulfonate, an alkylallyl sulfonate, a naphthaline sulfonate of formalin condensate, a polyoxyelhylene alkyl ether, a polyoxyethylene alkyl phenol ether, a polyoxyethylene alkyl ester, a sorbitan alkyl ester, a polyoxyethylene sorbitan alkyl ester, an acrylic polymer, a silicone mixed acrylic polymer, a vinyl polymer or a polysiloxane compound.

The antifoaming effect is influenced by the balance (HLB value) between hydrophilic groups and hydrophobic groups, and among such antifoaming agents, one having HLB of at most 6, particularly at most 4 is preferably used.

Further, if it is necessary to adjust the gloss of a coated film, a commonly used inorganic or organic delustering agent may simply be added.

Further, if coloring is needed, a colorant such as a commonly available organic pigment, inorganic pigment, organic dye, or a pigment or dye obtained by complexing them, may be dispersed, or added and mixed.

The colorant is preferably used within a range of from 10 to 120 parts by mass, particularly preferably from 20 to 100 parts by mass, per 100 parts by mass of the total amount of the fluorinated copolymer (A) and another synthetic resin (solid content of the polymer), depending on the type and application of the colorant. If the amount of the colorant is too small, its coloring effect cannot be sufficiently obtained, and if it is too large, its effect is saturated, such being not proper.

The aqueous coating composition of the present invention is excellent in storage stability in a state where the fluorinated copolymer (A) is dispersed in water, and further, excellent in storage stability in a state where various components which are usually blended in an aqueous coating composition are blended therein.

The aqueous coating composition of the present invention exerts, particularly in a case where components to be dispersed in water such as an inorganic pigment or organic pigment and components to assist their dispersion in water such as a pigment-dispersing agent or antifoaming agent are blended therein, its high storage stability effect, since precipitation of such various dispersed components likely to occur during a long-term storage is suppressed therein.

The aqueous coating composition of the present invention is used in combination with a curing agent which can react with crosslinking groups contained in the fluorinated copolymer (A). The fluorinated copolymer (A) contained in the aqueous coating composition of the present invention is one which is crosslinked and cured by reaction with a curing agent to form a coated film. Further, depending on the type of the crosslinking groups contained in the fluorinated copolymer (A), for example, an alkoxysilyl group can be cured to form a coated film by drying only, and in such a case, addition of a curing agent to the aqueous coating composition is not required.

In a case where a curing agent is required for curing the aqueous coating composition, usually, the aqueous coating composition and a curing agent component are separately prepared and stored like the two-pack type curable aqueous coating material kit of the present invention which will be described below, and are mixed at the time of using them to form a coated film.

### [Two-pack type curable aqueous coating material kit]

The two-pack type curable aqueous coating material kit of the present invention contains the aqueous coating composition of the present invention as a main component, and a curable agent composition containing a water-soluble or water-dispersible curing agent having functional groups which can react with the crosslinking groups contained in the fiuorinated copolymer (A). The aqueous coating composition as a main component and the curing agent composition are mixed at the time of using them to form a coated film.

The curing agent contained in the curing agent composition is a water-soluble or water-dispersible curing agent having functional groups which can react with the crosslinking groups contained in the fluorinated copolymer (A). At the time of using it, the aqueous coating composition as a main component and the curing agent composition are mixed, the crosslinking groups contained in the fluorinated copolymer (A) and the functional groups of the curing agent which can react with the crosslinking groups are placed under conditions for reacting them, thereby to proceed reaction for crosslinking and curing.

The fluorinated copolymer (A) in the aqueous coating composition as a main component may be one which can be crosslinked by drying at room temperature, depending on the curing agent, and in such a case, it is possible to form a coated film merely by applying the mixture of the aqueous coating composition as main component comprised and the curing agent composition to the surface of a material to be coated and being left to stand. In a case where heating is required for crosslinking the fluorinated copolymer (A) by the curing agent, a coated film may be formed by heating and baking.

Further, mixing of the aqueous coating composition as a main component and the curing agent composition, and application of the obtained mixture to a material to be coated may be carried out by a conventional method. The application method may, for example, be a roll coating, a curtain flow coating, a spray coating, an electrostatic coating and a bell coating.

As the water-soluble or water-dispersible curing agent having functional groups which can react with the crosslinking groups contained in the fluorinated copolymer (A) used in the present invention, an isocyanate type compound, a melamine resin, a phenol resin, a xylene resin and a toluene resin may, for example, be mentioned in a case where the crosslinking groups are hydroxy groups. In a case where the crosslinking groups are amino groups, a carbonyl group containing compound, an epoxy resin and an acid anhydride compound may, for example, be mentioned.

In a case where the fluorinated copolymer (A) is fluorinated copolymer (A) having hydroxy groups as the crosslinking groups of the polymerized units (a3), which is preferably used in the present invention, a melamine resin or a polyisocyanate compound is preferably used as a curing agent, and a polyisocyanate compound is particularly preferred from the viewpoint of easiness to obtain a coated film excellent in weather resistance and mechanical property.

The curing agent composition containing a polyisocyanate compound is preferably one in which a polyisocyanate compound is mechanically dispersed in water or one in which a self-emulsifiable polyisocyanate compound is emulsified and dispersed in water. The self-emulsifiable polyisocyanate compound is a compound which is capable of being emulsified and dispersed in water without an emulsifier.

The polyisocyanate compound to be mechanically dispersed in water may, for example, be an aliphatic polyisocyanate such as hexamethylene diisocyanate; an aromatic polyisocyanate such as m- or p-phenylene diisocyanate, 2,4- or 2,6-tolylene diisocyanate, diphenylmethane-4,4'-diisocyanate, naphthalene-1,5-diisocyanate or 4,4'-diisocyanate-3,3'-dimethyldiphenyl; an alicyclic polyisocyanate such as bis-(isocyanate cyclohexyl)methane or isophorone diisocyanate; a crude polyisocyanate such as crude tolylene diisocyanate or crude diphenylmethane diisocyanate; or a modified polyisocyanate such as carbodiimide-modified diphenylmethane diisocyanate, polyol-modified diphenylmethane diisocyanate or polyol-modified hexamethylene diisocyanate.

Such a polyisocyanate may be a dimer or trimer depending on its type such as a Burette type, an isocyanurate ring type or an uretdione type, or it may be a blocked polyisocyanate compound obtained by reacting an isocyanate group with a block agent.

The block agent may, for example, be an alcohol, a phenol, a caprolactam, an oxime or an active methylene compound. The polyisocyanate compound may be used alone or in combination as a mixture of two or more of them.

As the curing agent composition containing a polyisocyanate compound, in a case where a polyisocyanate compound which does not have self-emulsifiability is used, one in which the polyisocyanate compound is dispersed in water mechanically, e.g. by a disper, is used. The polyisocyanate compound to be mechanically dispersed in water is preferably one having a relatively low viscosity. When an emulsifier is added at the time of dispersing it, a more stable dispersion can be obtained. As the emulsifier to be used here, a known one may be used without any particular limitation, but it is not preferred to use an ionic one, particularly one having an active hydrogen atom, since it undergoes a reaction at the time of dispersing it to increase the viscosity or deteriorate the dispersibility. A non-ionic emulsifier, particularly an emulsifier having a polyoxyethylene chain is preferred.

Further, in a case where a non-blocked polyisocyanate compound is used as the curing agent, usually, it does not react with the fluorinated copolymer (A) for curing unless the temperature is at least 140°C. Therefore, when curing is desired to be carried out at a temperature lower than such a temperature, it is preferred to use a non-blocked polyisocyanate compound which is not blocked. From such a viewpoint, in the present invention, a non-blocked polyisocyanate compound is preferably used as the curing agent.

Further, as the self-emulsifiable polyisocyanate compound, it is possible to exemplify a prepolymer obtained by reacting the above polyisocyanate with a hydrophilic polyoxyalkylene.

The hydrophilic polyoxyalkylene is preferably one having at least one isocyanate reactive group and a number average molecular weight in a range of from 200 to 4,000. Particularly preferred is a polyoxyalkylene polyol or polyoxyalkylene monool having a molecular weight in a range of from 300 to 1,500. One having a low molecular weight cannot sufficiently achieve its self-emulsifying property. One having a high molecular weight has a good self-emulsifying property, but its stability in water becomes poor and its crystallinity becomes high, whereby the storage stability at a low temperature will decrease, and turbidity will be caused.

The oxyalkylene chain in the polyoxyalkylene is preferably one made of entirely or mostly an oxyethylene group from the viewpoint of hydrophilicity. Further, a polyoxyalkylene group having hydroxy groups or C₁₋₅ alkoxy groups at its terminals is more preferred.

The reaction of the polyisocyanate with the polyoxyalkylene, such as a polyoxyalkylene glycol is carried out in the presence of a catalyst such as a tertiary amine, an alkyl-substituted ethyleneimine, a tertiary alkylphosphine, a metal alkyl acetonate or an organic acid metal salt, and as the case requires, in the presence of a promoter at a temperature of at most 100°C. Further, with respect to the reaction, it is preferred to adjust the amount of remaining isocyanate group to be from 10 to 24 mass%, particularly from 15 to 20 mass%.

If the amount of the remaining isocyanate group is small, the reactivity with the fluorinated copolymer (A) will decrease, such being not preferred. Further, if the amount of the remaining isocyanate group is small, a large amount of the isocyanate compound is needed in order to achieve sufficient crosslinking degree, which is not preferred since the weather resistance of a coated film will sometimes be adversely affected. If the amount of the remaining isocyanate group is too large, it is difficult to form a stable emulsion, such being not preferred. Further, the self-emulsifiable isocyanate compound is described in e.g. JP-B-4-15270.

The melamine resin may, for example, be a melamine resin subjected to an alkyl etherification such as methyl etherification, butyl etherification or isobutyl etherification. From the viewpoint of water solubility, a melamine resin wherein at least a part of it is methyl-etherified, is preferred.

In the two-pack type curable aqueous coating material kit, the aqueous coating composition as a main component and the curing agent composition are blended in a blending ratio such that the molar equivalent of the functional groups of a curing agent contained in the curing agent composition becomes from 0.5 to 1.5, preferably from 0.8 to 1.3, based on 1 mole of the crosslinking groups of the fluorinated copolymer (A) contained in the aqueous coating composition as a main component.

Further, the mass ratio of the fluorinated copolymer (A) and the curing agent in the two-pack type curable aqueous coating material kit is preferably from 50 to 95 mass%/from 5 to 50 mass%, particularly preferably from 65 to 90 mass%/from 5 to 35 mass%, as represented by a ratio of fluorinated copolymer (A)/curing agent based on 100 mass% of the total amount of the fluorinated copolymer (A) and the curing agent, provided that the above-described molar ratio conditions are ensured.

### EXAMPLES

Now, the present invention will be described with reference to Examples. However, it should be understood that the present invention is by no means restricted thereto.

In Examples, "parts" represents "parts by mass" unless otherwise specified.

Here, Examples 1 to 4 are Working Examples (aqueous coating compositions containing a fluorinated copolymer having the characteristics as defined in the present invention) and Examples to 5 to 8 are Comparative Examples (aqueous coating compositions containing a fluorinated copolymer which do not have the characteristics as defined in the present invention).

Further, Examples 1, 3, 5 and 7 are Preparation Examples of aqueous coating composition 1 in which a fluorinated copolymer is dispersed in water. Each of Examples 2, 4, 6 and 8 is a Preparation Example of pigment blended aqueous coating composition 2 prepared by adding inorganic pigment component, etc. to aqueous coating composition 1 obtained in Examples 1, 3, 5 and 7, respectively.

### [EXAMPLE 1] Preparation of fluorinated copolymer (A1) and aqueous coating composition (A-11)

As the fluorinated copolymer (X1) which is a precursor of fluorinated copolymer (A1), a fluororesin LUMIFLON flake (chlorotrifluoroethylene/ethyl vinyl ether/cyclohexyl vinyl ether/hydroxybutyl vinyl ether (mol% ratio: 50/15/15/20), hydroxy group value: 100 mgKOH/g, weight average molecular weight (Mw): 7,000) for a coating material manufactured by Asahi Glass Company, Limited, was dissolved in methyl ethyl ketone (MEK) to obtain a varnish having a solid content of fluorinated copolymer (X1) of 60 mass%.

Further, each of polymerized units in the fluorinated copolymer (X1) corresponds to the above-described polymerized units (a1), polymerized units (a3) and polymerized units (a4) as follows.
Polymerized units (a1): Chlorotrifluoroethylene
Polymerized units (a3): Hydroxybutyl vinyl ether
Polymerized units (a4): Ethyl vinyl ether and cyclohexyl vinyl ether

To 300 parts of such varnish, 19.3 parts of a 20 mass% succinic anhydride acetone solution and 0.072 part of triethylamine as a catalyst were added, followed by a reaction at 70°C for 6 hours to esterify the fluorinated copolymer (X1). The infrared absorption spectrum of the reaction liquid was measured, whereby the characteristic absorptions (1,850 cm⁻¹ and 1,780 cm⁻¹) by an acid anhydride observed before the reaction were found to have disappeared, and absorptions of carboxylic acid (1,710 cm⁻¹) and ester (1,735 cm⁻¹) were observed.

The acid value of the fluorinated copoiymer after the esterification was 12 mgKOH/g, and hydroxy group value was 86 mgKOH/g. According to such values of the acid value and hydroxy group value, about 2.4 mol% was esterified out of 20 mol% of hydroxybutyl vinyl ether polymerized units (polymerized units (a3)).

Then, to the esterified fluorinated copolymer (X1), 3.9 parts of triethylamine was added, followed by stirring at room temperature for 20 minutes to neutralize some of the carboxylic acids, and then 180 parts of deionized water was gradually added. As a result, all of the about 2.4 mol% of the polymerized units in which carboxy groups were introduced by esterification were neutralized and changed into salts to form polymerized units corresponding to polymerized units (a2), whereby fluorinated copolymer (A1) was obtained. The raw material composition of the obtained fluorinated copolymer (A1), the acid value and hydroxy group value after the esterification, and mol% of each of polymerized units (a1) to (a4) obtained from such values are shown in Table 1. Further, the acid value and hydroxy group value after the esterification are equivalent to the acid value and hydroxy group value of the fluorinated copolymer (A1).

Further, with regard to the polymerized units (a2) of Table 1, the columns of "carboxylate groups (Y)" and "carboxy groups (Z)" are prepared for the breakdown of mol% of polymerized units in which carboxy groups are neutralized and changed into carboxylate groups and mol% of polymerized units in which carboxy groups are not neutralized. Further, the proportion (mol%) of polymerized units having carboxylate groups based on the total amount of the polymerized units (a2) obtained by Y/(Y+Z)×100 is shown in the column of "Y/(Y+Z)x100".

In the above-described neutralization step, fluorinated copolymer (A1) was obtained in a state that it was dispersed in water. After that, acetone and methyl ethyl ketone were distilled off under reduced pressure from the aqueous dispersion of the fluorinated copolymer (A1). Further, about 90 parts of deionized water was added to obtain aqueous coating composition 1 (A-11) having solid content concentration of the fluorinated copolymer (A1) of 40 mass%.

The average particle size of dispersed particles of the fluorinated copolymer (A1) contained in the aqueous coating composition 1 (A-11) was measured by means of a laser zeta potential·particle size analyzer ELS-8000 manufactured by Otsuka Electronics Co., Ltd. Further, the pH of the aqueous coating composition 1 (A-11) was measured by means of a pH meter PHL-20 manufactured by DKK-TOA Corporation.

Further, the aqueous coating composition 1 (A-11) was kept in an oven at 50°C for 2 weeks, and then its storage stability from the appearance. The result is shown in Table 1 along with the average particle size and pH.

### [Example 2] Preparation of pigment blended aqueous coating composition 2 (A-12)

70 Parts of titanium oxide pigment TiPURER706 (product name, manufactured by DuPont), 7 parts of pigment dispersing agent Disperbyk190 (product name, manufactured by BYK-Chemie), 1 part of antifoaming agent BYK-028 (product name, manufactured by BYK-Chemie), 22 parts of deionized water and 100 parts of glass beads were mixed and dispersed by using a grain mill disperser, and then the glass beads were removed by filtration to prepare a pigment dispersion.

To 50 parts by mass of the aqueous coating composition 1 (A-11) obtained in Example 1, 20 parts by mass of the pigment dispersion, 0.2 part of leveling additive BYK-348 (product name, manufactured by BYK-Chemie), and 0.1 part by mass of a polyurethane type associative thickener BERMODOL PUR 2150 (product name, manufactured by Akzo Nobel) were blended to prepare pigment blended aqueous coating composition 2 (A-12).

The obtained pigment blended aqueous coating composition 2 (A-12) was kept in an oven at 50°C for 4 weeks, and then its storage stability was evaluated from the appearance. The result is shown in Table 1. Further, it is possible to say that the pH of the pigment blended aqueous coating composition 2 (A-12) is almost equivalent to the pH of the aqueous coating composition 1 (A-11).

### [Example 3] Preparation of fluorinated copolymer (A2) and aqueous coating composition 1 (A-21)

Fluorinated copolymer (A2) and aqueous coating composition 1 (A-21) were prepared in the same manner as in Example 1 except that the amount of the 20 mass% succinic anhydride acetone solution used for the esterification and the amount of triethylamine used for the neutralizing reaction in the preparation of fluorinated copolymer (A1) and aqueous coating composition (A-11) were changed as shown in Table 1.

The raw material composition (parts by mass), the acid value and hydroxy group value after the esterification, and mol% of each of polymerized units obtained from such values in the obtained fluorinated copolymer (A2) are shown in Table 1 in the same manner as in Example 1.

Further, with regard to the aqueous coating composition 1 (A-21), measurement of the average particle size and pH of dispersed particles of the fluorinated copolymer (A2) and evaluation of its storage stability after storing it in an oven at 50°C for 2 weeks were carried out in the same manner as in Example 1. The results are shown in Table 1.

### [Example 4] Preparation of pigment blended aqueous coating composition 2 (A-22)

Pigment blended aqueous coating composition 2 (A-22) was prepared by blending inorganic pigment component, etc. in the same manner as in Example 2 except that the aqueous coating composition 1 (A-21) obtained in Example 3 was used instead of the aqueous coating composition 1 (A-11).

The obtained pigment blended aqueous coating composition 2 (A-22) was kept in an oven at 50°C for 4 weeks, and then its storage stability was evaluated from the appearance. The result is shown in Table 1. Further, it is possible to say that the pH of the pigment blended aqueous coating composition 2 (A-22) is almost equivalent to the pH of the aqueous coating composition 1 (A-21).

### [Example 5] Preparation of fluorinated copolymer (A3) and aqueous coating composition 1 (A-31)

Fluorinated copolymer (A3) and aqueous coating composition 1 (A-31) were prepared in the same manner as in Example 1 except that the amount of the 20 mass% succinic anhydride acetone solution used for the esterification and the amount of triethylamine used for the neutralizing reaction in the preparation of the fluorinated copolymer (A1) and the aqueous coating composition 1 (A-11) were changed as shown in Table 1.

The raw material composition (parts by mass), the acid value and hydroxy group value after the esterification, and mol% of each of polymerized units obtained from such values in the obtained fluorinated copolymer (A3) are shown in Table 1. Further, as shown in Table 1, in the fluorinated copolymer (A3), 70.8 mol% of the carboxy groups introduced in the esterification step were neutralized and changed into carboxylate groups, and 29.2 mol% were not neutralized and remained as the carboxy groups.

Further, with regard to the aqueous coating composition 1 (A-31), measurement of the average particle size and pH of dispersed particles of the fluorinated copolymer (A3) and evaluation of its storage stability after storing it in an oven at 50°C for 2 weeks were carried out in the same manner as in Example 1. The results are shown in Table 1.

### [Example 6] Preparation of pigment blended aqueous coating composition 2 (A-32)

Pigment blended aqueous coating composition 2 (A-32) was prepared by adding inorganic pigment component, etc. in the same manner as in Example 2 except that the aqueous coating composition 1 (A-31) obtained in Example 5 was used instead of the aqueous coating composition 1 (A-11).

The obtained pigment blended aqueous coating composition 2 (A-32) was kept in an oven at 50°C for 4 weeks, and then its storage stability was evaluated from the appearance. The result is shown in Table 1. Further, it is possible to say that the pH of the pigment blended aqueous coating composition 2 (A-32) is almost equivalent to the pH of the aqueous coating composition 1 (A-31).

### [Example 7] Preparation of fluorinated copolymer (A4) and aqueous coating composition 1 (A-41)

Fluorinated copolymer (A4) and aqueous coating composition 1 (A-41) were prepared in the same manner as in Example 1 except that the amount of the 20 mass% succinic anhydride acetone solution used for the esterification and the amount of triethylamine used for the neutralizing reaction in the preparation of the fluorinated copolymer (A1) and the aqueous coating composition 1 (A-11) were changed as shown in Table 1.

The raw material composition (parts by mass), the acid value and hydroxy group value after the esterification, and mol% of each of the polymerized units obtained from such values in the obtained fluorinated copolymer (A4) are shown in Table 1 in the same manner as in Example 1.

Further, with regard to the aqueous coating composition 1 (A-41), measurement of the average particle size and pH of dispersed particles of the fluorinated copolymer (A4) and evaluation of its storage stability after storing it in an oven at 50°C for 2 weeks were carried out in the same manner as in Example 1. The results are shown in Table 1.

### [Example 8] Preparation of pigment blended aqueous coating composition 2 (A-42)

Pigment blended aqueous coating composition 2 (A-42) was prepared by adding inorganic pigment component, etc. in the same manner as in Example 2 except that the aqueous coating composition 1 (A-41) obtained in Example 7 was used instead of the aqueous coating composition 1 (A-11).

The obtained pigment blended aqueous coating composition 2 (A-42) was kept in an oven at 50°C for 4 weeks, and then its storage stability was evaluated from the appearance. The result is shown in Table 1. Further, it is possible to say that the pH of the pigment blended aqueous coating composition 2 (A-42) is almost equivalent to the pH of the aqueous coating composition 1 (A-41).

### (Evaluation of coating property)

The coating properties of the above-obtained 4 types of pigment blended aqueous coating composition 2 were evaluated by the following method.

That is, to 100 parts by mass of each of the pigment blended aqueous coating compositions 2 ((A-12), (A-22), (A-32), and (A-42)), 10 parts by mass of curing agent BAYHYDUR 3100 (product name: manufactured by Bayer AG, a curing agent having a solid content concentration of a polyoxyalkylene-modified polyisocyanate (HDI trimer) of 100 mass%) was mixed, and each of the obtained mixture was applied on the surface of an aluminum plate treated with chromate so that a film thickness as dried would be 40 µm. Then, drying was carried out at 80°C for 1 hour to obtain 4 types of a chromate-treated aluminum plate having a coated film.

That is, the two-pack type curable aqueous coating material kit comprising the pigment blended aqueous coating composition 2 ((A-12) or (A-22)) as a main component and a curing agent composition containing polyisocyanate type compound BAYHYDUR 3100, and a two-pack type curable aqueous coating material kit of Comparative Example comprising the pigment blended aqueous coating composition 2 ((A-32) or (A-42)) as a main component and a curing agent composition containing polyisocyanate type compound BAYHYDUR 3100, were produced, and then their coating properties were evaluated.

The polyisocyanate type compound BAYHYDUR 3100 is a non-blocked polyisocyanate compound.

Further, the polyisocyanate type compound BAYHYDUR 3100 contains a polyoxyalkylene group having a hydroxy group or a C₁₋₅ alkoxy group at its terminals.

With regard to the coated film surface of each of the obtained 4 types of the chromate treated aluminum plate having a coated film, 60° gloss was measured by means of handy gloss meter PG-1M manufactured by Nippon Denshoku Co., Ltd. in accordance with a method described in ISO2813. As a result, all of the coated films formed by curing each of the above-described 4 types of pigment blended aqueous coating composition 2 ((A-12), (A-22), (A-32) and (A-42)) by adding a curing agent were found to have a high gloss value of at least 80° gloss.

**[Table 1]**

| | | | Unit | Ex.1 | Ex.2 | Ex.3 | Ex.4 | Ex.5 | Ex. 6 | Ex.7 | Ex.8 |
|---|---|---|---|---|---|---|---|---|---|---|---|
| Raw materials used for esterification step | Fluorinated copolymer (X) 60 wt% varnish | | Parts by mass | 300 | | 300 | | 300 | | 300 | |
| | Succinic anhydride (20% acetone solution) | | Parts by mass | 19.3 | | 33.8 | | 19.3 | | 65.9 | |
| Acid value and hydroxy group vale after esterification step (Similar to fluorinated copolymer (A)) | Acid value | | mgKOH/g | 12 | | 21 | | 12 | | 41 | |
| | Hydroxy group value | | mgKOH/g | 86 | | 79 | | 86 | | 59 | |
| Compound used for neutralizing step | Triethylamine | | Parts by mass | 3.9 | | 6.8 | | 2.73 | | 9.3 | |
| Polymerized units composition of fluorinated copolymer (A) | Polymerized units (a1) | | mol% | 50 | | 50 | | 50 | | 50 | |
| | Polymerized units (a2) | | mol% | 2.4 | | 4.2 | | 2.4 | | 8.2 | |
| | Breakdown | Carboxylate groups (Y) | mol% | 2.4 | | 4.2 | | 1.7 | | 8.2 | |
| | | Carboxylic groups (Z) | mol% | 0 | | 0 | | 0.7 | | 0 | |
| | Y/(Y+Z)×100 | | mol% | 100 | | 100 | | 70.8 | | 100 | |
| | Polymerized units (a3) | | mol% | 17.6 | | 15.8 | | 17.6 | | 11.8 | |
| | Polymerized units (a4) | | mol% | 30 | | 30 | | 30 | | 30 | |
| Average particle size of dispersed particles of fluorinated copolymer (A) | | | nm | 85 | | 66 | | 130 | | 58 | |
| Evaluation of aqueous coating composition 1 (Fluorinated copolymer (A)+water) | Aqueous coating composition 1 abbreviates | | | A-11 | - | A-21 | - | A-31 | - | A-41 | - |
| | pH of aqueous coating composition 1 | | | 7.8 | | 8 | | 7.4 | | 7.1 | |
| | Storage stability at 50°C for 2 weeks | | | No changes | | No changes | | No changes | | Precipitated after 2 weeks | |
| Evaluation of aqueous coating composition 2 (Blended with various components such as pigment) | Aqueous coating composition 2 abbreviates | | | - | A-12 | - | A-22 | - | A-32 | - | A-42 |
| | Storage stability at 50°C for 4 weeks | | | | No changes | | No changes | | Precipitated after 10 days | | Precipitated after 20 days |
| | Coating property evaluation (60° gloss) | | | | At least 80° | | At least 80° | | At least 80° | | At least 80° |

### INDUSTRIAL APPLICABILITY

The aqueous coating composition comprising the fluorinated copolymer of the present invention is excellent in the storage stability, and the two-pack type curable aqueous coating material kit containing the aqueous coating composition as a main component in combination with a curable agent composition is useful for a primer or top-middle coating of materials including a metal material such as a steel plate or a surface-treated steel plate, a plastic material, an inorganic material, etc. Further, the two-pack type curable aqueous coating material kit of the present invention is useful for imparting beauty, weather resistance, acid resistance, rust resistance, chipping resistance, electrical insulating property, etc. to a pre-coated metal including an antirust steel plate, an automobile painting, a plastic painting, etc.

The entire disclosure of Japanese Patent Application No. 2010-213907 filed on September 24, 2010 including specification, claims and summary is incorporated herein by reference in its entirety.

## Claims

1. An aqueous coating composition, which comprises water and particles that have an average particle size of from 50 to 100 nm and are made of a fluorinated copolymer (A) having from 40 to 60 mol% of the following polymerized units (a1), from 1 to 5 mol% of the following polymerized units (a2), from 4 to 30 mol% of the following polymerized units (a3), and from 3 to 50 mol% of the following polymerized units (a4), based on the total amount of polymerized units contained in the copolymer, and which is **characterized by** having a pH of from 7.0 to 9.5:
Polymerized units (a1): polymerized units derived from a fluoroolefin
Polymerized units (a2): polymerized units having carboxy groups which are partially or totally neutralized and changed into carboxylate groups, wherein the proportion of the carboxylate groups in the total amount of the polymerized units (a2) is from 95 to 100 mol% (provided that at least either one of the carboxy groups and the carboxylate groups may be dissociated into cations and anions in the aqueous coating composition)
Polymerized units (a3): polymerized units having crosslinking groups other than carboxy groups
Polymerized units (a4): polymerized units represented by the following formula (1); 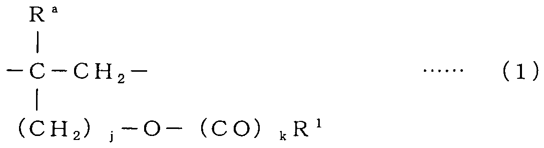 (provided that, in the formula (1), R^{a} is a hydrogen atom or a methyl group, R¹ is a C₁₋₁₂ alkyl group or a C₄₋₁₀ monovalent cycloalkyl group, j is an integer of from 0 to 8, and k is 0 or 1).

2. The aqueous coating composition according to Claim 1, wherein the fluoroolefin is at least one member selected from the group consisting of tetrafluoroethylene, hexafluoropropylene, chlorotrifluoroethylene and vinylidene fluoride.

3. The aqueous coating composition according to Claim 1 or 2, wherein the crosslinking groups contained in the polymerized units (a3) are at least one member selected from the group consisting of hydroxy groups, amino groups, and alkoxysilyl groups.

4. The aqueous coating composition according to any one of Claims 1 to 3, wherein the proportion of the particles made of the fluorinated copolymer (A) is from 10 to 50 mass% based on the total amount of the composition.

5. The aqueous coating composition according to any one of Claims 1 to 4, wherein a monomer to form the polymerized units (a4) is ethyl vinyl ether, n-butyl vinyl ether, cyclohexyl vinyl ether, vinyl acetate, vinyl valerate or vinyl pivalate.

6. The aqueous coating composition according to any one of Claims 1 to 5, which further contains a colorant.

7. A two-pack type curable aqueous coating material kit comprising the aqueous coating composition as defined in any one of Claims 1 to 6 as a main component, and a curable agent composition containing a water-soluble or water-dispersible curing agent having functional groups which can react with the crosslinking groups contained in the fluorinated copolymer (A).

8. The two-pack type curable aqueous coating material kit according to Claim 7, wherein the curing agent is a polyisocyanate compound.

9. The two-pack type curable aqueous coating material kit according to Claim 8, wherein the polyisocyanate compound is a non-blocked polyisocyanate compound.

10. The two-pack type curable aqueous coating material kit according to Claim 8 or 9, wherein the polyisocyanate compound contains a polyoxyalkylene group having a hydroxy group or a C₁₋₅ alkoxy group at its terminals.
